# EUROPEAN PATENT APPLICATION

(11) **EP 4 213 295 A1**
(43) Date of publication of application: **19.07.2023**
(21) Application number: 23151504.0
(22) Date of filing: 13.01.2023
(51) Int. Cl.: H01M 50/533, H01M 50/178, H01M 50/536, H01M 50/54

(54) **SECONDARY BATTERY**

(30) Priority: 14.01.2022 KR 20220005835
(71) Applicant: Samsung SDI Co., Ltd., Yongin-si, Gyeonggi-do 17084 (KR)
(72) Inventor: LEE, Mi Sun, 17084 Yongin-si (KR); RO, Dae Sung, 17084 Yongin-si (KR); KIM, Dong Hui, 17084 Yongin-si (KR)
(74) Representative: Marks & Clerk LLP

(57) **Abstract**

A secondary battery includes an electrode assembly including a current collection tab protruding to one side; a case including a main body having an accommodating part accommodating the electrode assembly, and a cover covering the main body; and an electrode lead electrically connected to the current collection tab and drawn out of the case, wherein the current collection tab is bent twice, and a length of the current collection tab is twice a thickness of the electrode assembly.

## Description

### BACKGROUND

### 1. Field

Embodiments relate to a secondary battery.

### 2. Description of the Related Art

Unlike a primary battery that cannot be charged, a secondary battery is a battery that can be charged and discharged. Low-capacity batteries are used in portable small electronic devices such as smart phones, feature phones, tablet computers, notebook computers, digital cameras, and camcorders, and large-capacity batteries are widely used as power sources for driving motors in hybrid and electric vehicles.

The secondary battery may include an electrode assembly including a negative electrode and a positive electrode, a case accommodating the same, and a terminal connected to the electrode assembly. Secondary batteries may be classified into circular, prismatic, and pouch-shaped types according to the shape thereof. Specifically, a pouch-type secondary battery may be formed of a pouch exterior material that is easily deformable into various shapes and has a low weight.

The above information disclosed in this Background section is only for enhancement of understanding of the background of the invention and therefore it may contain information that does not constitute prior art.

### SUMMARY

Embodiments are directed to a secondary battery capable of increasing the utilization rate of internal space of a case and improving energy density.

A secondary battery according to the present disclosure may include: an electrode assembly including a current collection tab protruding to one side; a case including a main body having an accommodating part accommodating the electrode assembly, and a cover covering the main body; and an electrode lead electrically connected to the current collection tab and drawn out of the case, wherein the current collection tab is bent twice, and a length of the current collection tab is substantially twice (*e.g.* twice) a thickness of the electrode assembly.

The current collection tab may include a front end portion connected to an electrode uncoated portion of the electrode assembly, a terminal end portion to which the electrode lead is connected, and a center point located between the front end portion and the terminal end portion, wherein the current collection tab may be bent upwardly at the front end portion and bent downwardly from the center point.

An angle formed by the current collection tab bent at the center point may be less than 90 degrees.

The electrode lead may be coupled to the lower side of the current collection tab and may be interposed between the front end portion and the terminal end portion.

The electrode lead may be coupled to the upper side of the current collection tab and may be located outside the bent current collection tab.

The electrode lead may be bent at the accommodating part and drawn out of the case.

In addition, a secondary battery according to the present disclosure may include: an electrode assembly including a current collection tab protruding to one side; a case including a main body having an accommodating part accommodating the electrode assembly, and a cover covering the main body; and an electrode lead electrically connected to the current collection tab and drawn out of the case, wherein the current collection tab is bent three times, and the length of the current collection tab is two or more or more than the thickness of the electrode assembly.

The current collection tab may include a front end portion connected to an electrode uncoated portion of the electrode assembly, a terminal end portion to which the electrode lead is connected, and a first point and a second point located between the front end portion and the terminal end portion, wherein the first point may be a point that is located at substantially1/3 (*e.g.* 1/3) of the length of the current collection tab, and the second point may be a point that is located at substantially 2/3 (*e.g.* 2/3) of the length of the current collection tab.

The current collection tab may be bent at the front end portion, the first point, and the second point.

The current collection tab may be bent such that the front end portion meets the second point and the first point meets the terminal end portion.

A region of the current collection tab between the front end portion and the first point may be located at the outermost side of the current collection tab.

The electrode lead may be coupled to the lower side of the current collection tab and may be between the first point and the terminal end portion.

The electrode lead may be coupled to the upper side of the current collection tab and may be between the electrode uncoated portion and the terminal end portion.

A region of the current collection tab between the second point and the terminal end portion may be located at the outermost side of the current collection tab.

The electrode lead may be coupled to the lower side of the current collection tab and may be located outside the bent current collection tab.

The electrode lead may be coupled to the upper side of the current collection tab and may be interposed between the first region and the terminal end portion.

At least some of the above and other features of the invention are set out in the claims.

### BRIEF DESCRIPTION OF DRAWINGS

Features will be apparent to those of skill in the art by describing in detail embodiments with reference to the attached drawings in which:
FIG. 1 is a perspective view illustrating a secondary battery according to an embodiment of the present disclosure.
FIGS. 2A to 2C are views for explaining a coupling relationship between a current collection tab and an electrode lead according to an embodiment of the present disclosure.
FIGS. 3A to 3C are views for explaining a coupling relationship between a current collection tab and an electrode lead according to an embodiment of the present disclosure.
FIGS. 4A to 4C are views for explaining a coupling relationship between a current collection tab and an electrode lead according to an embodiment of the present disclosure.
FIGS. 5A to 5C are views for explaining a coupling relationship between a current collection tab and an electrode lead according to an embodiment of the present disclosure.
FIGS. 6A and 6B are views for explaining a coupling relationship between a current collection tab and an electrode lead according to an embodiment of the present disclosure.
FIGS. 7A and 7B are views for explaining a coupling relationship between a current collection tab and an electrode lead according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the terms "or" and "and/or" are not exclusive terms, and include any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise", "include", "comprising", or "including" when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

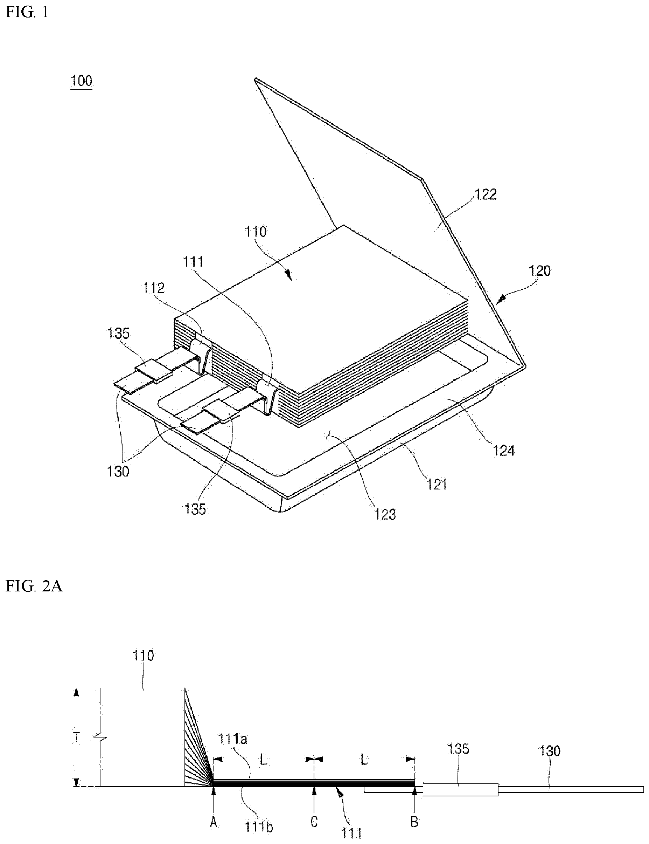

FIG. 1 is a perspective view illustrating a secondary battery according to an embodiment of the present disclosure.

Referring to FIG. 1, the secondary battery 100 according to an embodiment of the present disclosure includes an electrode assembly 110, a case 120, and an electrode lead 130.

The electrode assembly 110 may include a first electrode plate, a second electrode plate, and a separator. Here, the first electrode plate may operate as a negative electrode, and the second electrode plate may operate as a positive electrode.

The first electrode plate may be formed by applying a first electrode active material such as graphite or carbon to a first electrode current collector formed of a metal foil such as copper or nickel. The first electrode plate may include a first electrode uncoated portion, which is a region to which the first electrode active material is not applied. The first electrode uncoated portion may provide a path for current flow between the first electrode plate and the outside.

The second electrode plate may be formed by applying a second electrode active material such as a transition metal oxide to a second electrode current collector formed of a metal foil, such as aluminium, and may include a second electrode uncoated portion, which is a region to which the second electrode active material is not applied.

In addition, the first electrode uncoated portion may form the first current collection tab 111. The first current collection tab 111 may include a plurality of first current collection tabs and may be formed to protrude from the first electrode plate. The first current collection tabs 111 may protrude in a certain direction from the first electrode plate and overlap at one side.

In addition, the second electrode uncoated portion may form a second current collection tab 112. The second current collection tab 112 may include a plurality of second current collection tabs and may be formed to protrude from the second electrode plate. The second current collection tabs 112 may protrude in a certain direction from the second electrode plate and overlap at one side. The second current collection tabs 112 protrude in the same direction as the first current collection tabs 111, and may be spaced apart from each other.

The separator may be placed between the first electrode plate and the second electrode plate to prevent a short circuit and to enable the movement of lithium ions. The separator may be made of polyethylene, polypropylene, or a composite film of polyethylene and polypropylene. In some examples, the separator may have a larger area than the first electrode plate and the second electrode plate in order to effectively prevent electrical shorting between the first electrode plate and the second electrode plate.

The electrode assembly 110 may be substantially accommodated in the case 120 together with an electrolyte. The electrolyte may be formed of a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC). The electrolyte may be in a liquid, solid or gel phase. The first current collection tab 111 and the second current collection tab 112 may be electrically connected to the electrode lead 130, respectively.

The electrode assembly 110 may be configured as a stack type or a lamination type by sequentially stacking a plurality of first electrode plates, separators, second electrode plates, and separators.

The case 120 may include a main body 121 and a cover 122 folded in a longitudinal direction on one side of a rectangular pouch film, which generally may be integrally formed. In some implementations, the case 120 may not be integrated but may be a separate pouch film in which the main body 121 and the folded portion of the cover 122 are separated. In some examples, the case 120 may include or be referred to as a pouch-type case or an exterior material. In some examples, the case 120 may be a multilayer thin film composed of a metal layer and an insulating layer formed on both sides of the metal layer.

The main body 121 may include an accommodating part 123, which is a groove for accommodating the electrode assembly 110. The main body 121 may include a sealing portion 124 extending outwardly along the edge of the accommodating part 123. The case 120 may be sealed by placing the electrode assembly 110 on the accommodating part 123 and then thermally fusing the sealing portion 124 and the edge of the cover 122 in a closely adhered state. The sealing portion 124 is a portion where the body 121 and the cover 122 are fused to each other. The sealing portion 124 may extend flatly to a certain length.

The electrode lead 130 may be electrically connected to the first current collection tab 111 and the second current collection tab 112, respectively. In some implementations, the electrode lead 130 connected to the first current collection tab 111 may be a negative electrode lead, and the electrode lead 130 connected to the second current collection tab 112 may be a positive electrode lead. In some implementations, the electrode lead 130 may include or be referred to as a lead tab, an electrode terminal, or a strip terminal.

The electrode lead 130 may be electrically connected to one end of the first current collection tab 111 and the second current collection tab 112, respectively, and may be drawn out of the case 120. In some implementations, the electrode lead 130 may be electrically connected to the first current collection tab 111 and the second current collection tab 112 through welding. In some implementations, the electrode lead 130 may be drawn out through a gap between the sealing portion 124 of the main body 121 and the cover 122. For example, one end of the electrode lead 130 may be connected to the first current collection tab 111 or the second current collection tab 112, and the other end of the electrode lead 130 may be drawn out of the case 120. In some implementations, the other end of the electrode lead 130 that is drawn out may be referred to as a lead-out part.

In addition, the electrode lead 130 may further include an insulating member 135 surrounding the electrode lead 130. The insulating member 135 may serve to prevent an electrical short between the electrode lead 130 and the case 120. In some implementations, the insulating member 135 may prevent an electrical short between the metal layer of the case 120 and the electrode lead 130. The insulating member 135 may be located between the sealing portion 124 of the main body 121 and the cover 122. In some implementations, when the sealing portion 124 and the cover 122 are thermally fused, the insulating member 135 may be thermally fused together.

In some implementations, the first current collection tab 111 and the second current collection tab 112 to which the electrode lead 130 is connected may be bent at least twice and accommodated in the accommodating part 123.

FIGS. 2A to 2C are views for explaining a coupling relationship between a current collection tab and an electrode lead according to an embodiment of the present disclosure.

In the present disclosure, since the coupling relationship between each of the first and second current collection tabs 111 and 112 and the electrode lead 130 is the same, the following description will focus on the coupling relationship between the first current collection tab 111 and the electrode lead 130. In addition, in the following description, the term "current collection tab 111" refers to the first current collection tab 111, but it is to be understood that the same description will also be applicable to the second current collection tab 112.

Referring to FIG. 2A, the current collection tab 111 may include a first surface (upper side) 111a and a second surface (lower side) 111b that is opposite to the first surface 111a. On the basis of the direction (thickness direction) in which the electrode assemblies 110 are stacked, the current collection tab 111 may be located on or toward the lower side of the electrode assembly 110. In an implementation, when the electrode assembly 110 is turned over, the current collection tab 111 may be located on top of the electrode assembly 110. The electrode lead 130 may be electrically connected to the second surface 111b of the current collection tab 111.

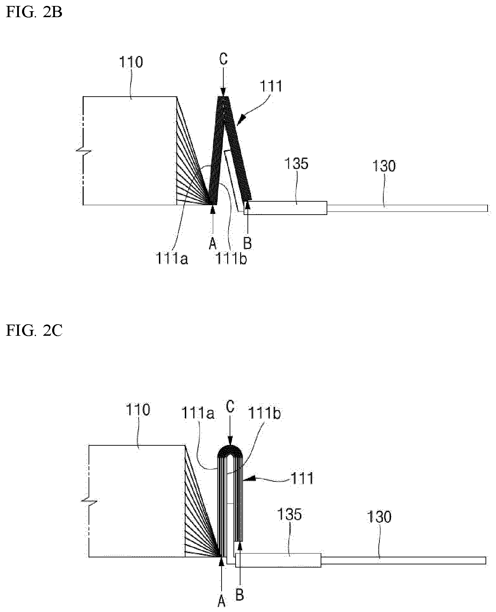

As shown in FIG. 2B, the current collection tab 111 may be folded in half so that the current collection tab 111 closely adheres to the electrode assembly 110. The current collection tab 111 may include a front end portion A in which a plurality of electrode uncoated portions meet, a terminal end portion B to which the electrode lead 130 is connected, as a portion where the current collection tab 111 ends, and a center point C located at the center of the collection tab 111. The term "center point C" refers to a point that is 1/2 the (e.g., total) length of the (unfolded) current collection tab (111). In an implementation, the distance, e.g., length (L), from the front end portion A to the center point C and the distance, e.g., length (L), from the center point C to the terminal end portion B may be the same. The electrode lead 130 may be electrically connected to the terminal end portion B.

In some implementations, the length of the (unfolded) current collection tab 111 may be (e.g., at least) twice (e.g., two times) the thickness T of the electrode assembly 110. In an implementation, the length (L) from the front end portion A of the current collection tab 111 to the center point C may be equal to the thickness (T) of the electrode assembly 110 (e.g., L=T).

The current collection tab 111 may be bent once at the front end portion A and may be bent once more at the center point C. In some implementations, the current collection tab 111 may be bent upwardly at approximately 90 degrees at the front end portion A and bent downwardly at approximately 180 degrees at the center point C. Accordingly, the front end portion A and the terminal end portion B of the current collection tab 111 may be adjacent to each other. In an implementation, the current collection tab 111 may be bent so that the second surfaces 111b may face each other. Thus, the electrode lead 130 attached to the second surface 111b of the current collection tab 111 may be located between the bent current collection tabs 111. In some implementations, the electrode lead 130 may be located between the current collection tabs 111 by bending a region attached to the current collection tabs 111. The electrode lead 130 may be located between the front end portion A and the terminal end portion B of the current collection tab 111.

The first surface 111a of the current collection tab 111 may be exposed to the outside (e.g., outwardly exposed). As such, when the electrode lead 130 is located between the bent current collection tabs 111, it may be possible to prevent the case 120 from being damaged by burrs generated when the electrode lead 130 is welded to the current collection tab 111.

The angle formed by the current collection tab 111 bent at the center point C may be less than 90 degrees. As shown in FIG. 2B, the current collection tab 111 may be bent in an approximate V shape at the center point C, or as shown in FIG. 2C, the current collection tab 111 may be bent in a substantially U-shape at the center point C.

In some implementations, the bent current collection tab 111 may be fixed using an adhesive or a tape. In an implementation, the adhesive may include a UV curable adhesive or a heat-curable adhesive.

In an implementation, even if the thickness of the electrode assembly 110 were to be reduced, the current collection tab 111 could still be bent and stored inside the case 120. Thus, the area of the sealing portion 124 may be reduced and the capacity of the secondary battery 100 per unit area may be increased. In an implementation, by accommodating the current collection tab 111 inside the case 120 by bending the current collection tab 111, the energy density may be secured by increasing the utilization rate of the internal space of the case 120.

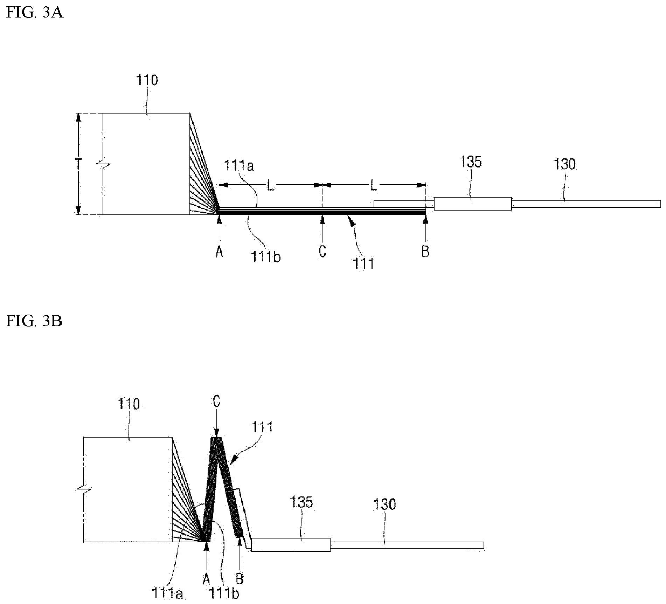

FIGS. 3A to 3C are views for explaining a coupling relationship between a current collection tab and an electrode lead according to an embodiment of the present disclosure.

Referring to FIG. 3A, the electrode lead 130 may be electrically connected to the first surface (upper side) 111a of the current collection tab 111. The current collection tab 111 may include a front end portion A in which a plurality of electrode uncoated portions meet, a terminal end portion B to which the electrode lead 130 is connected, as a portion where the current collection tab 111 ends, and a center point C located at the center of the collection tab 111.

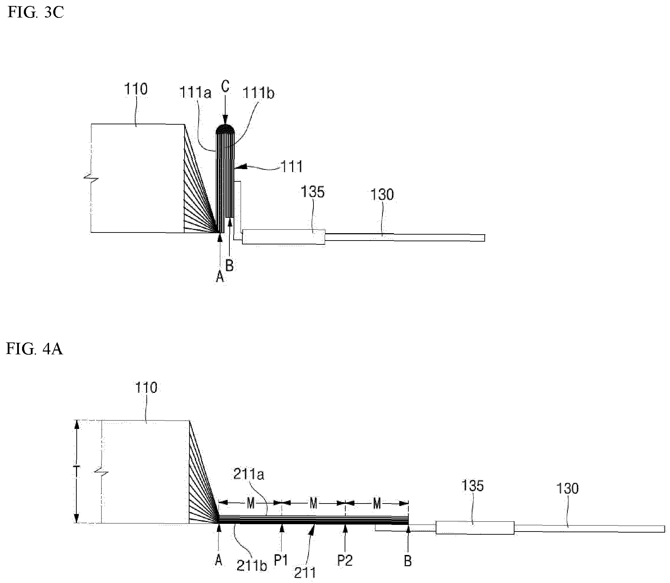

Next, as shown in FIGS. 3B and 3C, the current collection tab 111 may be folded in half (V-shaped or U-shaped) so that the current collection tab 111 closely adheres to the electrode assembly 110. The current collection tab 111 may be bent once at the front end portion A and may be bent once more at the center point C. The current collection tab 111 may be bent such that the second surfaces 111b come into contact with each other, so that the electrode lead 130 attached to the first surface 111a of the current collection tab 111 may be exposed to the outside. The electrode lead 130 may be located on the outermost side of the current collection tab 111. An angle formed by the current collection tab 111 bent at the center point C may be less than 90 degrees.

FIGS. 4A to 4C are views for explaining a coupling relationship between a current collection tab and an electrode lead according to another embodiment of the present disclosure.

Referring to FIG. 4A, the current collection tab 211 may include a first surface (upper side) 211a and a second surface (lower side) 211b opposite to the first surface 211a. The electrode lead 130 may be electrically connected to the second surface 211b of the current collection tab 211.

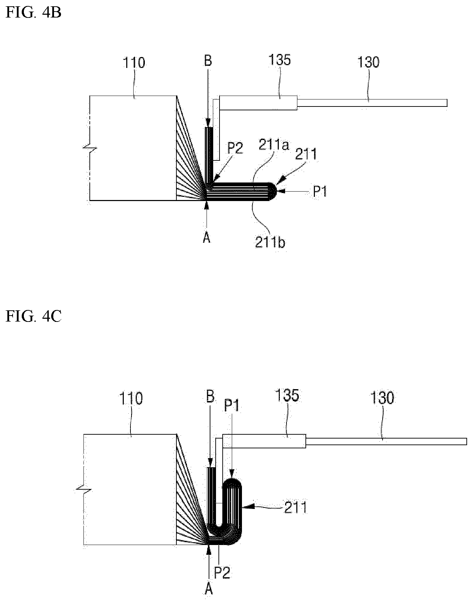

As shown in FIGS. 4B and 4C, the current collection tab 211 may be brought into close contact with the electrode assembly 110 by bending the current collection tab 211 three times. In an implementation, the current collection tab 211 may include a front end portion A in which a plurality of electrode uncoated portions meet, a terminal end portion B to which the electrode lead 130 is connected, as a portion where the current collection tab 211 ends, and a first point P1 and a second point P2 located between the front end portion A and the terminal end portion B. The first point P1 refers to a point that is about 1/3 of the length of the current collection tab 211, and the second point P2 refers to a point that is about 2/3 of the length of the current collection tab 211. In an implementation, a distance (e.g., length (M)) from the front end portion A to the first point P1, a distance (e.g., length (M)) from the first point P1 to the second point P2, and a distance (e.g., length (M)) from the second point P2 to the terminal end portion B may be about the same. The electrode lead 130 may be electrically connected to the terminal end portion B. In an implementation, the length (M) from the front end portion A to the first point P1 may be smaller than the thickness (T) of the electrode assembly 110 (M<T).

The current collection tab 211 may be bent at front end portion A, the first point P1, and the second point P2, respectively. In some examples, the front end portion A may be bent at approximately 90 degrees, and the first point P1 and the second point P2 may be bent at approximately 180 degrees.

Referring to FIG. 4B, the current collection tab 211 may be bent at 180 degrees at the first point P1 so that the first surfaces 211a may face each other. At the same time, the current collection tab 211 may be bent at 90 degrees at second point P2. Here, the electrode lead 130 may also be bent at 90 degrees, and the lead-out portion of the electrode lead 130 may be located at the upper end of the electrode assembly 110. In addition, the second point P2 may meet the front end portion A. The region from the front end portion A to the first point P1 may contact the region from the first point P1 to the second point P2. The region from the second point P2 to the terminal end portion B may be located parallel to the thickness direction of the electrode assembly 110.

Referring to FIG. 4C, the front end portion A of the current collection tab 211 may be bent at 90 degrees so that the second surfaces 211b of the current collection tab 211 face each other, and thus the current collection tab 211 may closely adhere to the electrode assembly 110. When the front end portion A is bent, the second point P2 located on the front end portion A may be bent at 90 degrees altogether. As a result, the second point P2 may be bent at 180 degrees. Accordingly, the first point P1 may meet the terminal end portion B, and the electrode lead 130 welded to the terminal end portion B may be located between the bent current collection tabs 211. The electrode lead 130 may be located between the terminal end portion B and the first point P1. In addition, the terminal end portion B of the current collection tab 211 may be located between the electrode uncoated portion and the electrode lead 130. The region between the front end portion A and the first point P1 may be located at the outermost side of the current collection tab 211.

In some implementations, the bent current collection tabs 211 may be fixed through an adhesive or a tape. In an implementation, the adhesive may include a UV curable adhesive or a heat-curable adhesive.

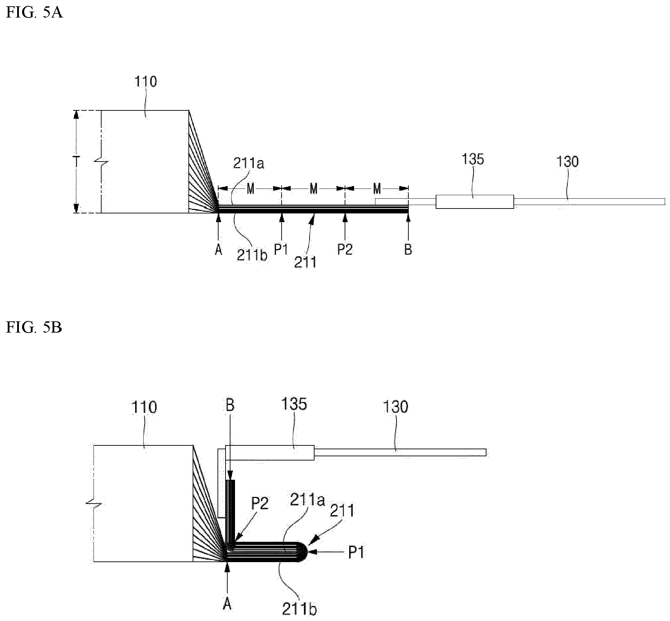

FIGS. 5A to 5C are views for explaining a coupling relationship between a current collection tab and an electrode lead according to another embodiment of the present disclosure.

Referring to FIG. 5A, the electrode lead 130 may be electrically connected to a first surface (upper side) 211a of the current collection tab 211. The current collection tab 211 may include a front end portion A in which a plurality of electrode uncoated portions meet, a terminal end portion B that is drawn out of the case 120 as a portion where the current collection tab 211 ends, and a first point P1 and a second point P2 located between the front end portion A and the terminal end portion B.

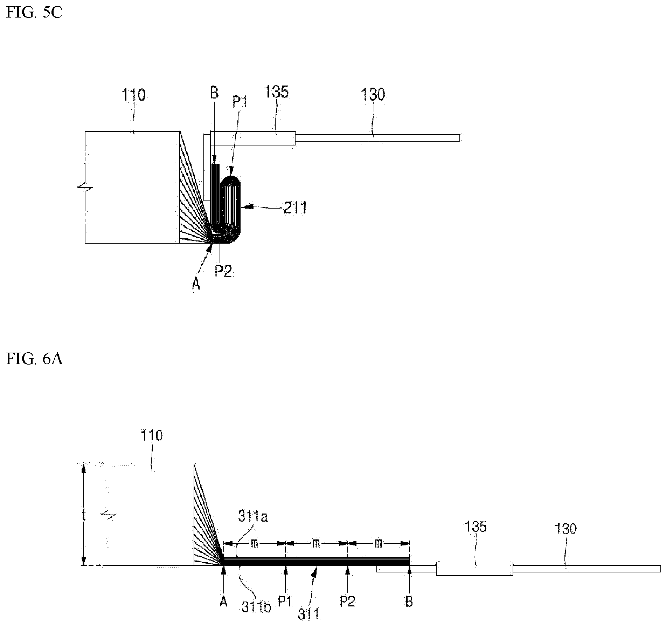

Next, as shown in FIGS. 5B and 5C, the current collection tab 211 may be bent three times, and thus may closely adhere to the electrode assembly 110. The method of bending the current collection tab 211 may be the same as the method shown in FIGS. 4B and 4C. The electrode lead 130 attached to the first surface 211a of the current collection tab 211 may be adjacent to an electrode uncoated portion and may face the electrode assembly 110. The electrode lead 130 may be located between the electrode uncoated portion and the terminal end portion B of the current collection tab 211.

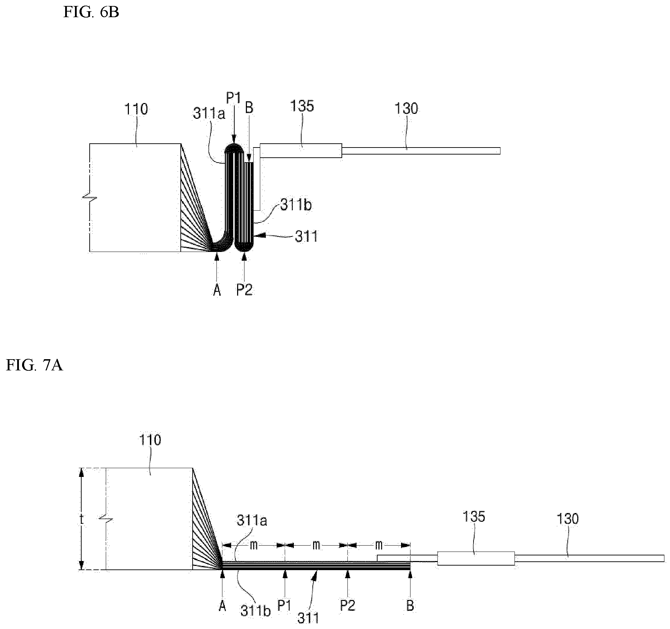

FIGS. 6A and 6B are views for explaining a coupling relationship between a current collection tab and an electrode lead according to an embodiment of the present disclosure.

Referring to FIG. 6A, the current collection tab 311 may include a first surface (upper side) 311a and a second surface (lower side) 311b that is opposite to the first surface 311a. The electrode lead 130 may be electrically connected to the second surface 311b of the current collection tab 311. In some implementations, the electrode lead 130 may be welded to the terminal end portion B of the current collection tab 311 after the current collection tab 311 is bent.

As shown in FIG. 6B, the current collection tab 311 may be bent three times, and thus may closely adhere to the electrode assembly 110. The current collection tab 311 may include a front end portion A in which a plurality of electrode uncoated portions meet, a terminal end portion B which is connected to the electrode lead 130, as a portion where the current collection tab 311 ends, and a first point P1 and a second point P2 located between the front end portion A and the terminal end portion B. In some implementations, a distance (m) between the front end portion A and the first point P1 may be about equal to the thickness (t) of the electrode assembly 110 (m=t).

First, the front end portion A of the current collection tab 311 may be bent upwardly at 90 degrees, and the first point P1 may be bent at 180 degrees, such that the second surfaces 311b of the current collection tab 311 face each other. Next, the second point P2 may be bent at 180 degrees such that the first surfaces 311a of the current collection tab 311 face each other, so that the current collection tab 311 may closely adhere to the electrode assembly 110. In addition, when the second point P2 is bent, the electrode lead 130 located at the terminal end portion B may be bent at an angle of 90 degrees so that the lead-out portion of the electrode lead 130 is located at the upper end of the electrode assembly 110. In addition, the region between the second point P2 and the terminal end portion B may be located at the outermost side of the current collection tab 311.

Accordingly, the front end portion A may meet the second point P2, and the first point P1 may meet the terminal end portion B. The electrode lead 130 welded to the terminal end portion B may be positioned on the outermost side of the bent current collection tab 311.

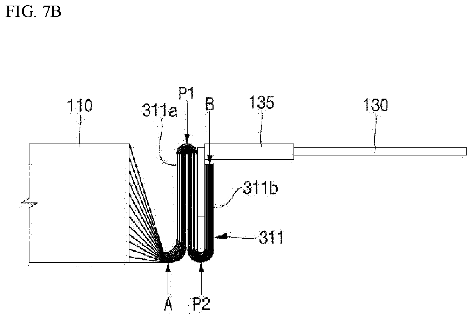

FIGS. 7A and 7B are views for explaining a coupling relationship between a current collection tab and an electrode lead according to an embodiment of the present disclosure.

Referring to FIG. 7A, the current collection tab 311 may include a first surface (upper surface) 311a and a second surface (lower surface) 311b that is opposite to the first surface 311a. The electrode lead 130 may be electrically connected to the first surface 311a of the current collection tab 311.

As shown in FIG. 7B, the current collection tab 311 may be bent three times, and thus may closely adhere to the electrode assembly 110. The method of bending the current collection tab 311 may be the same as the method shown in FIG. 6B. The electrode lead 130 electrically connected to the first surface 311a of the current collection tab 311 may be located between the bent current collection tabs 311. In some implementations, the electrode lead 130 may be located between the first point P1 and the terminal end portion B.

As described above, in the secondary battery according to embodiments of the present disclosure, the utilization rate of the internal space of the case may be increased, and the energy density may be improved by bending the current collecting tab several times and storing the battery inside the case.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly including a current collection tab protruding to one side;
a case including a main body having an accommodating part accommodating the electrode assembly, and a cover covering the main body; and
an electrode lead electrically connected to the current collection tab and drawn out of the case,
wherein:
the current collection tab is bent twice, and
a length of the current collection tab is substantially twice a thickness of the electrode assembly.

2. The secondary battery as claimed in claim 1, wherein:
the current collection tab includes:
a front end portion connected to an electrode uncoated portion of the electrode assembly;
a terminal end portion to which the electrode lead is connected; and
a center point located between the front end portion and the terminal end portion, and
the current collection tab is bent upwardly at the front end portion and bent downwardly from the center point.

3. The secondary battery as claimed in claim 2, wherein an angle formed by the current collection tab bent at the center point is less than 90 degrees.

4. The secondary battery as claimed in claim 2 or claim 3, wherein the electrode lead is coupled to a lower side of the current collection tab and is between the front end portion and the terminal end portion.

5. The secondary battery as claimed in claim 2 or claim 3, wherein the electrode lead is coupled to an upper side of the current collection tab and is located outside the bent current collection tab.

6. The secondary battery as claimed in any one of claims 1 to 5, wherein the electrode lead is bent at the accommodating part and drawn out of the case.

7. A secondary battery, comprising:
an electrode assembly including a current collection tab protruding to one side;
a case including a main body having an accommodating part accommodating the electrode assembly, and a cover covering the main body; and
an electrode lead electrically connected to the current collection tab and drawn out of the case,
wherein:
the current collection tab is bent three times, and
a length of the current collection tab is two or more than the thickness of the electrode assembly.

8. The secondary battery as claimed in claim 7, wherein:
the current collection tab includes:
a front end portion connected to an electrode uncoated portion of the electrode assembly;
a terminal end portion to which the electrode lead is connected; and
a first point and a second point located between the front end portion and the terminal end portion,
the first point is a point that is located at substantially 1/3 of the length of the current collection tab, and
the second point is a point that is located at substantially 2/3 of the length of the current collection tab.

9. The secondary battery as claimed in claim 8, wherein the current collection tab is bent at the front end portion, the first point, and the second point.

10. The secondary battery as claimed in claim 8 or claim 9, wherein the current collection tab is bent such that the front end portion meets the second point and the first point meets the terminal end portion.

11. The secondary battery as claimed in claim 8, wherein a region of the current collection tab between the front end portion and the first point is located at an outermost side of the current collection tab.

12. The secondary battery as claimed in claim 11, wherein the electrode lead is coupled to the lower side of the current collection tab and is interposed between the first point and the terminal end portion.

13. The secondary battery as claimed in claim 11, wherein the electrode lead is coupled to the upper side of the current collection tab and is between the electrode uncoated portion and the terminal end portion.

14. The secondary battery as claimed in claim 8 or claim 9, wherein a region of the current collection tab between the second point and the terminal end portion is located at the outermost side of the current collection tab.

15. The secondary battery as claimed in claim 14, wherein:
(i) the electrode lead is coupled to the lower side of the current collection tab and is located outside the bent current collection tab; or
(ii) the electrode lead is coupled to the upper side of the current collection tab and is between the first region and the terminal end portion.
